# EUROPÄISCHE PATENTANMELDUNG

(11) **EP 0 602 562 A1**
(43) Veröffentlichungstag der Anmeldung: **22.06.1994**
(21) Anmeldenummer: 93119947.5
(22) Anmeldetag: 10.12.1993
(51) Int. Cl.: C09B 62/517, C09B 67/54, C09B 67/26

(54) **Verfahren zur Herstellung von Phthalocyaninreaktivfarbstoffe**

(30) Priorität: 18.12.1992 DE 4242975
(71) Anmelder: BASF Aktiengesellschaft, D-67063 Ludwigshafen (DE)
(72) Erfinder: Dornhagen, Jürgen, Dr., D-6703 Limburgerhof (DE); Patsch, Manfred, Dr., D-6706 Wachenheim (DE)

(57) **Zusammenfassung**

Verfahren zur Herstellung von Phthalocyaninreaktivfarbstoffen, wobei man Phthalocyaninsulfonsäurechloride mit Aminen, die eine reaktive Gruppe aufweisen, umsetzt und das resultierende Reaktionsgemisch einer Membranbehandlung unterwirft.

## Beschreibung

Die vorliegende Erfindung betrifft ein neues Verfahren zur Herstellung von Phthalocyaninreaktivfarbstoffen, wobei man Phthalocyaninsulfonsäurechloride mit Aminen, die eine reaktive Gruppe aufweisen, umsetzt und das resultierende Reaktionsgemisch einer Membranbehandlung unterwirft.

Die Umsetzung von Phthalocyaninsulfonsäurechloriden mit reaktive Gruppen aufweisenden Aminen in Gegenwart von stickstoffhaltigen Heterocyclen unter Bildung von Phthalocyaninreaktivfarbstoffen ist bekannt und z.B. in der DE-A-2 824 211, DE-A-2 906 442, EP-A-75 905, EP-A-231 837 oder in der älteren deutschen Patentanmeldung P 42 38 047.2 beschrieben.

Die aus diesen Syntheseverfahren resultierenden Farbstoffe weisen häufig noch Mängel in ihren anwendungstechnischen Eigenschaften auf. Beispielhaft sind eine ungenügende Lichtechtheit und unbefriedigende Naßechtheiten, insbesondere eine schlechte Hypochloritbleichechtheit, zu nennen.

Aufgabe der vorliegenden Erfindung war es nun, ein neues Verfahren zur Herstellung von Phthalocyaninreaktivfarbstoffen bereitzustellen, das in einfacher Weise durchgeführt werden kann und mittels dessen man zu Farbstoffen gelangt, die die genannten anwendungstechnischen Mängel nicht mehr aufweisen.

Es wurde nun gefunden, daß die Herstellung von Phthalocyaninreaktivfarbstoffen der Formel I 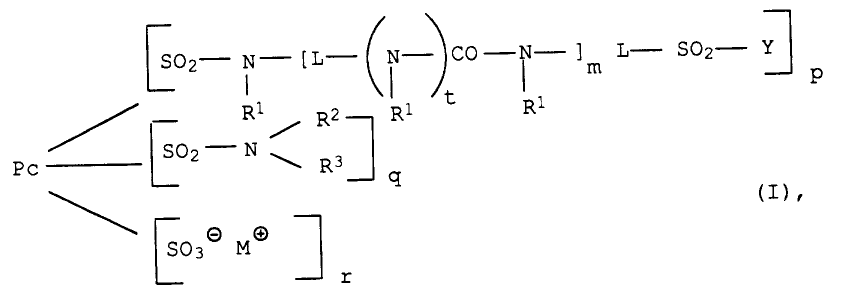
in der
- Pc: den Rest eines metallfreien oder metallhaltigen Phthalocyaninsystems, das gegebenenfalls durch Chlor oder Phenyl substituiert ist,
- R¹: Wasserstoff oder C₁-C₆-Alkyl,
- R² und R³: unabhängig voneinander jeweils Wasserstoff, C₁-C₆-Alkyl, das gegebenenfalls durch 1 oder 2 Sauerstoffatome in Etherfunktion unterbrochen ist, Phenyl oder zusammen mit dem sie verbindenden Stickstoffatom einen fünf- oder sechsgliedrigen gesättigten heterocyclischen Rest, der weitere Heteroatome aufweisen kann,
- L: C₂-C₄-Alkylen, das gegebenenfalls durch ein Sauerstoffatom in Etherfunktion unterbrochen ist, Naphthylen oder einen Rest der Formel 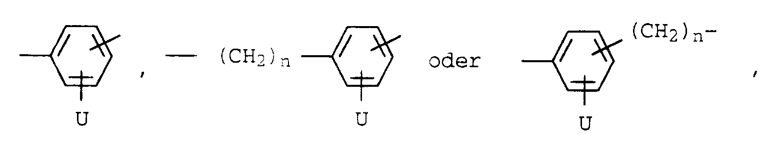 worin U für Wasserstoff, Hydroxysulfonylmethyl oder Hydroxysulfonyl und n für 1 oder 2 stehen,
- Y: Vinyl oder einen Rest der Formel C₂H₄-Q, worin Q für eine unter alkalischen Reaktionsbedingungen abspaltbare Gruppe steht,
- M^{⊕}: das Äquivalent eines Kations,
- m: 0 oder 1,
- p: 1 bis 3,
- q: 0 bis 3,
- r: 1 bis 3 und
- t: 0 oder 1 bedeuten,
mit der Maßgabe, daß die Summe von p, q und r höchstens 4 ist, durch Umsetzung eines Phthalocyaninsulfonsäurechlorids der Formel II 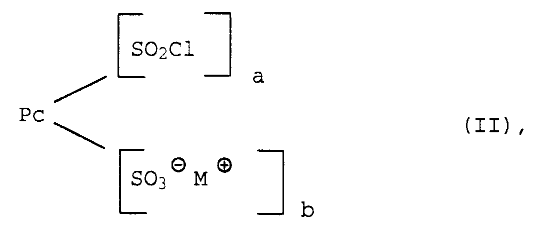
in der Pc und M^{⊕} jeweils die obengenannte Bedeutung besitzen und a 1 bis 4 und b 0 bis 3 bedeuten, mit der Maßgabe, daß die Summe von a und b höchstens 4 ist, oder einer Mischung von Phthalocyaninsulfonsäurechloriden der Formel II mit einem Amin der Formel III 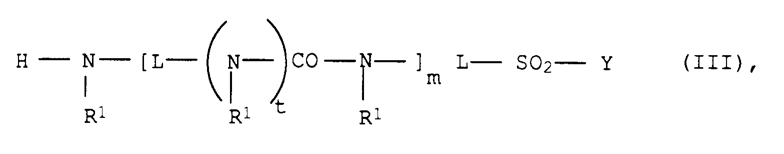
in der R¹, L, Y, m und t jeweils die obengenannte Bedeutung besitzen, und gegebenenfalls mit einem Amin der Formel IV 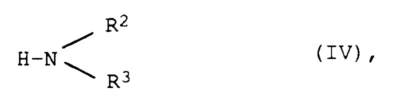
in der R² und R³ jeweils die obengenannte Bedeutung besitzen, sowie gegebenenfalls in Anwesenheit eines stickstoffhaltigen Heterocyclus, wobei die Reihenfolge der Umsetzung mit den Aminen III und IV beliebig sein kann, vorteilhaft gelingt, wenn man nach beendeter Umsetzung das Reaktionsgemisch einer Membranbehandlung unterwirft und es so in ein wäßriges Retentat, in dem die Farbstoffe der Formel I aufkonzentriert sind, und in ein wäßriges Permeat, das Salze, das Amin der Formel III sowie gegebenenfalls das Amin der Formel IV enthält, auftrennt.

Bei den Phthalocyaninreaktivfarbstoffen im erfindungsgemäßen Verfahren handelt es sich um metallfreie oder metallhaltige Phthalocyanine. Metallhaltige Phthalocyanine sind insbesondere Kupfer-, Kobalt- oder Nickelphthalocyanine. Die Herstellung von Kupferphthalocyaninreaktivfarbstoffen ist bevorzugt.

Reste R¹, R² und R³ sind z. B. Methyl, Ethyl, Propyl, Isopropyl, Butyl, Isobutyl, sec-Butyl, Pentyl, Isopentyl, Neopentyl, tert-Pentyl, Hexyl oder 2-Methylpentyl.

Reste R² und R³ sind weiterhin z.B. 2-Methoxyethyl, 2-Ethoxyethyl, 2-Propoxyethyl, 2-Isopropoxyethyl, 2-Butoxyethyl, 2- oder 3-Methoxypropyl, 2- oder 3-Ethoxypropyl, 2- oder 3-Propoxypropyl, 2- oder 4-Methoxybutyl, 2- oder 4-Ethoxybutyl, 3,6-Dioxaheptyl oder 3,6-Dioxaoctyl.

Wenn die Reste R² und R³ zusammen mit dem sie verbindenden Stickstoffatom einen fünf- oder sechsgliedrigen gesättigten heterocyclischen Rest, der weitere Heteroatome aufweisen kann, bedeuten, so können dafür z. B. Pyrrolidinyl, Piperidinyl, Morpholinyl, Piperazinyl oder N-(C₁-C₄-Alkyl)piperazinyl in Betracht kommen.

Reste L sind z. B. (CH₂)₂, (CH₂)₃, (CH₂)₄, CH(CH₃)CH₂, CH(CH₃)CH(CH₃) (CH₂)₂O(CH₂)₂, Phenylen, Hydroxysulfonylmethylphenylen, Hydroxysulfonylphenylen, Naphthylen oder Phenylenmethylen.

M^{⊕} stellt des Äquivalent eines Kations dar. Es stellt entweder ein Proton dar oder leitet sich von Metall- oder Ammoniumionen ab. Metallionen sind insbesondere die Lithium-, Natrium- oder Kaliumionen. Unter Ammoniumionen im erfindungsgemäßen Sinne sind unsubstituierte oder substituierte Ammoniumkationen zu verstehen. Substituierte Ammoniumkationen sind z.B. Monoalkyl-, Dialkyl-, Trialkyl- Tetraalkl- oder Benzyltrialkylammoniumkationen oder solche Kationen, die sich von stickstoffhaltigen fünf- oder sechsgliedrigen gesättigten Heterocyclen ableiten, wie Pyrrolidinium-, Piperidinium-, Morpholinium-, Piperazinium- oder N-Alkylpiperaziniumkationen oder deren N-monoalkyl- oder N,N-dialkylsubstituierte Produkte. Unter Alkyl ist dabei im allgemeinen geradkettiges oder verzweigtes C₁-C₂₀-Alkyl zu verstehen, das durch Hydroxylgruppen substituiert und/oder durch Sauerstoffatome in Etherfunktion unterbrochen sein kann. Das Ammoniumion kann sich auch von den eingangs erwähnten Heterocyclen ableiten.

Besonders als Kationen hervorzuheben sind Protonen oder Lithium-, Natrium- oder Kaliumionen.

Der Rest Q steht für eine unter alkalischen Reaktionsbedingungen abspaltbare Gruppe. Solche Gruppen sind z.B. Chlor, Brom, C₁-C₄-Alkylsulfonyl, Phenylsulfonyl, OSO₃H, SSO₃H, OP(O)(OH)₂, C₁-C₄-Alkylsulfonyloxy, Phenylsulfonyloxy, C₁-C₄-Alkanoyloxy, C₁-C₄-Dialkylamino oder ein Rest der Formel 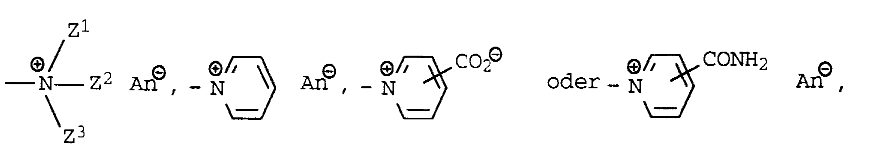
wobei Z¹, Z² und Z³ gleich oder verschieden sind und unabhängig voneinander jeweils die Bedeutung von C₁-C₄-Alkyl oder Benzyl und An^{⊖} jeweils die Bedeutung eines Äquivalents eines Anions besitzen. Als Anionen können dabei z.B. Fluorid, Chlorid, Bromid, Iodid, Mono-, Di- oder Trichloracetat, Methansulfonat, Benzolsulfonat oder 2- oder 4-Methylbenzolsulfonat in Betracht kommen.

Wenn das erfindungsgemäße Verfahren in Gegenwart eines stickstoffhaltigen Heterocyclus durchgeführt wird, so kommen hierfür z.B. Pyridin, Pyridincarbonsäuren, wie Pyridin-2-carbonsäure, Pyridin-3-carbonsäure, Pyridin-4-carbonsäure, Pyridin-2,3-dicarbonsäure, Pyridin-2,4-dicarbonsäure, Pyridin-2,5-dicarbonsäure, Pyridin-2,6-dicarbonsäure, Pyridin-3,4-dicarbonsäure, Pyridin-3,5-dicarbonsäure, Pyridin-2,3,4-tricarbonsäure, Pyridin-2,4,5-tricarbonsäure, 4-Methylpyridin-3-carbonsäure, 4-Ethylpyridin-3-carbonsäure, 6-Methylpyridin-3-carbonsäure, 4,6-Dimethylpyridin-2-carbonsäure, 2,6-Dimethylpyridin-3-carbonsäure oder 2-Methylpyridin-3,4-dicarbonsäure, Pyridinsulfonsäuren, wie Pyridin-2-sulfonsäure, Pyridin-3-sulfonsäure, Pyridin-4-sulfonsäure oder 2-Methylpyridin-3-sulfonsäure, Pyridincarbonsäureamide, wie Pyridin-2-carbonsäureamid, Pyridin-3-carbonsäure-amid, Pyridin-4-carbonsäureamid, Pyridin-2,3-dicarbonsäurediamid, Pyridin-2,4-dicarbonsäurediamid, Pyridin-2,5-dicarbonsäurediamid, Pyridin-2,6-dicarbonsäurediamid, Pyridin-3,4-dicarbonsäurediamid, Pyridin-3,5-dicarbonsäurediamid, Pyridin-2,3,4-tricarbonsäuretriamid, Pyridin-2,4,5-tricarbonsäuretriamid, 4-Methylpyridin-3-carbonsäureamid, 4-Ethylpyridin-3-carbonsäureamid, 6-Methylpyridin-3-carbonsäureamid, 4,6-Dimethylpyridin-2-carbonsäureamid, 2,6-Dimethylpyridin-3-carbonsäureamid oder 2-Methylpyridin-3,4-dicarbonsäurediamid, Pyridinsulfonsäureamide, wie Pyridin-2-sulfonsäureamid, Pyridin-3-sulfonsäureamid, Pyridin-4-sulfonsäureamid oder 2-Methylpyridin-3-sulfonsäureamid, 1-(C₁-C₄-Alkyl)imidazole, in denen die Alkylgruppe gegebenenfalls durch C₁-C₄-Alkoxy substituiert ist, wie 1-Methylimidazol, 1-Ethylimidazol, 1-Propylimidazol, 1-Isopropylimidazol, 1-Butylimidazol, 1-Isobutylimidazol, 1-sec-Butylimidazol, 1-(2-Methoxyethyl)imidazol, 1-(2-Ethoxyethyl)imidazol, 1-(2-Propoxyethyl)imidazol, 1-(2-Isopropoxyethyl)imidazol, 1-(2-Butoxyethyl)imidazol, 1-(2-Methoxypropyl)imidazol, 1(3-Methoxypropyl)imidazol, 1-(2-Ethoxypropyl)imidazol, 1-(3-Ethoxypropyl)imidazol, 1-(2-Methoxybutyl)imidazol, 1-(4-Methoxybutyl)imidazol, 1-(2-Ethoxybutyl)imidazol oder 1-(4-Ethoxybutyl)imidazol, 1-Carboxymethylimidazol, 1,2-Dimethylimidazol, 1-Methylimidazol-5-carbonsäure, 1-Carboxymethyl-1,3,4-triazol, 4-(C₁-C₄-Dialkylamino)pyridin, wie 4-Dimethylaminopyridin oder 4-Diethylaminopyridin, 4-(Pyrrolidin-1-yl)pyridin, 4-(Piperidin-1-yl)pyridin, 4-(Morpholin-4-yl)pyridin, 4-(Piperazin-4-yl)pyridin, 4-[N-(C₁-C₄-Alkyl)piperazin-1-yl]pyridin, wie 4-(N-Methylpiperazin-1-yl)pyridin oder 4-(N-Ethylpiperazin-1-yl)pyridin, oder Dimethyltetrazol in Betracht.

Das erfindungsgemäße Verfahren wird vorzugsweise in Gegenwart eines stickstoffhaltigen Heterocyclus, insbesondere eines 1-(C₁-C₄-Alkyl)imidazols durchgeführt.

Die erfindungsgemäße Membranbehandlung umfaßt solche Prozesse wie Ultrafiltration, Umkehrosmose oder Elektrodialyse.

Bevorzugt ist eine Verfahrensweise, bei der das Reaktionsgemisch einer Ultrafiltration unterworfen wird.

Die Membrantrennungstechniken sind an sich bekannt und beispielsweise in Angew. Chem., Int. Ed. 21, 660, 1982; H. Strathmann "Trennung von molekularen Mischungen mit Hilfe synthetischer Membranen", Steinkopf Verlag, Darmstadt, 1979, S. 76 bis 86; D.S. Flett "Ion Exchange Membranes", Ellis Horwood, Chichester 1983, S. 179 bis 191; oder E. Staude "Membranen und Membranprozesse", VCH Verlags GmbH, Weinheim, 1992; beschrieben.

Geeignete Membranmaterialien zur Durchführung des erfindungsgemäßen Verfahrens sind z.B. Celluloseacetat, Polyamid, Polyimid, Polyacrylnitril, Polytetrafluorethylen, Polystyrol, Polyetherketone, Polysulfone, Regeneratcellulose oder sulfonierte Materialien.

Die erfindungsgemäße Membranbehandlung wird zweckmäßig so durchgeführt, daß man das Reaktionsgemisch in eine Vorrichtung pumpt, die eine oder mehrere Membranen in Form von gewickelten Modulen oder Röhrenmodulen enthält, wobei die Anwendung von Röhrenmodulen bevorzugt ist.

Die nominelle Molekulargewichtsgrenze (Ausschlußgrenze) der Membranen beträgt im allgemeinen 300 bis 50 000.

Die Temperatur des Reaktionsgemisches das dem Membrantrennverfahren unterworfen wird, beträgt in der Regel 10 bis 90°C, vorzugsweise 10 bis 60°C und insbesondere 20 bis 40°C.

Das nach dem ersten Durchlauf resultierende Gemisch wird üblicherweise für einen Zeitraum von 2 bis 48 Stunden kontinuierlich rückgeführt, wobei ein Arbeitsdruck von 2 bis 100 bar, vorzugsweise 5 bis 40 bar und insbesondere 20 bis 40 bar herrscht. Dabei wird es in ein wäßriges Retentat, in dem die Farbstoffe der Formel I aufkonzentriert sind, und in ein wäßriges Permeat, das Salze, das Amin der Formel III sowie gegebenenfalls das Amin der Formel IV enthält, aufgetrennt.

Hervorzuheben ist die Herstellung von Phthalocyaninreaktivfarbstoffen der Formel I, in der
- Pc: den Rest eines Kupferphthalocyaninsystems, das nicht weiter substituiert ist,
- R¹: Wasserstoff oder C₁-C₄-Alkyl,
- R² und R³: unabhängig voneinander jeweils Wasserstoff oder C₁-C₄-Alkyl, das gegebenenfalls durch ein Sauerstoffatom in Etherfunktion unterbrochen ist,
- L: C₂-C₃-Alkylen, Phenylen oder Phenylenmethylen und
- m und t: jeweils 0 bedeuten und Y, M^{⊕} ,p,q und r jeweils die obengenannte Bedeutung besitzen.

Besonders zu nennen ist die Herstellung von Phthalocyaninreaktivfarbstoffen der Formel I, in der m 0, p 1,3 bis 2,5 und q 0 bedeuten.

Besonders zu nennen ist weiterhin die Herstellung von Phthalocyaninreaktivfarbstoffen der Formel I, in der m O, R¹ Wasserstoff und L Phenylen bedeuten.

Besonders zu nennen ist weiterhin die Herstellung von Phthalocyaninreaktivfarbstoffen der Formel I, in der q O bedeutet.

Besonders zu nennen ist weiterhin die Herstellung von Phthalocyaninreaktivfarbstoffen der Formel I, in der Y Vinyl, 2-Sulfatoethyl oder 2-Thiosulfatoethyl bedeutet.

Die erfindungsgemäß herstellbaren Phthalocyaninreaktivfarbstoffe, beispielsweise die Farbstoffe der Formel I, werden in der Regel in Form von Gemischen der Einzelverbindungen, beispielsweise der Einzelverbindungen der Formel I, erhalten, wobei sich diese Einzelverbindungen voneinander durch den Substitutionsgrad der Hydroxysulfonylgruppen und Sulfonamidgruppen am Phthalocyaninrest unterscheiden - am Beispiel der Formel I durch den Substitutionsgrad der mit den Indizes p,q und r bezeichneten Reste. Am Beispiel der Formel I sind deshalb bei der Bezeichnung der Formel des erhaltenen Phthalocyaninreaktivfarbstoffs die Indices p, q und r in der Regel gebrochene Zahlen.

Das erfindungsgemäße Verfahren wird zweckmäßig in wäßrigem Medium bei einem pH-Wert von 3,5 bis 8,5, vorzugsweise 4 bis 8, insbesondere 5 bis 7, unter Zusatz eines säurebindenden Mittels durchgeführt.

Das erfindungsgemäße Verfahren kann bei einer Temperatur von 0 bis 60°C durchgeführt werden. Bevorzugt erfolgt die Umsetzung bei einer Temperatur von 10 bis 35°C.

Säurebindende Mittel, die in dem erfindungsgemäßen Verfahren verwendet werden, sind beispielsweise Hydroxide, Carbonate oder Hydrogencarbonate, sekundäre oder tertiäre Phosphate, Borate oder Acetate der Metalle der ersten bis dritten Gruppe des Periodensystems, vorzugsweise die Natrium- oder Kaliumverbindungen oder auch Calciumverbindungen.

Zur Verbesserung der Löslichkeit der Ausgangs- oder Endprodukte im wäßrigen Reaktionsmedium kann man gegebenenfalls organische Lösungsmittel, vorzugsweise Amide aliphatischer Carbonsäuren, wie N,N-Dimethylformamid, N,N-Dimethylacetamid, N-Methylpyrrolidin-2-on oder 1,3-Dimethyltetrahydropyrimid-2-on, zusetzen.

Bezogen auf 1 mol Phthalocyaninsulfonsäurechlorid kommen in der Regel 1 bis 8 mol, vorzugsweise 1,5 bis 4 mol, eines Amins, das den reaktiven Anker trägt, sowie 0 bis 4 mol, vorzugsweise 0 bis 2 mol des "nichtreaktiven Amins" zur Anwendung.

Wenn das erfindungsgemäße Verfahren in Gegenwart von stickstoffhaltigen Heterocyclen durchgeführt wird, so werden diese in einer Menge von 0,1 bis 1 mol-%, vorzugsweise 0,1 bis 0,5 mol-%, jeweils bezogen auf das Gewicht an Phthalocyaninsulfonsäurechlorid, angewandt.

Das erfindungsgemäße Verfahren wird zweckmäßig so durchgeführt, daß man zunächst Phthalocyaninsulfonsäurechlorid, gegebenenfalls in Anwesenheit von Hilfsmitteln, wie Dispergiermittel oder Entschäumer, in Wasser suspendiert und unter den obengenannten Reaktionsbedingungen mit dem Eintrag des Amins, welches den reaktiven Anker trägt, gegebenenfalls des stickstoffhaltigen Heterocyclus und gegebenenfalls des "nichtreaktiven" Amins beginnt. Nach beendeter Umsetzung, die in der Regel 6 bis 8 Stunden in Anspruch nimmt, wird das Reaktionsgemisch, wie oben bereits näher beschrieben, einer Memoranbehandlung unterworfen. Danach kann der Reaktivfarbstoff aus der entstandenen Lösung z.B. durch Sprühtrocknen isoliert werden.

Es ist aber auch möglich, die resultierende Farbstofflösung, nach entsprechender Standardisierung und gegebenenfalls weiterer Zugabe von Puffersubstanzen, ohne weitere Isolierung des entstandenen Farbstoffs direkt als Flüssigeinstellung zum Färben oder Bedrucken von Fasermaterialien zu verwenden.

Das erfindungsgemäße Verfahren kann in der Weise modifiziert werden, daß vor, während oder nach der eigentlichen Kondensationsreaktion ein Teil der Sulfonsäurechloridgruppen des Phthalocyaninsulfonsäurechlorids, z. B. der Formel II, durch Hydrolyse in Hydroxysulfonylgruppen übergeführt wird. Es kann die Kondensation beispielsweise so durchgeführt werden, daß gleichzeitig mit der Umsetzung der Amine, z. B. des Amins III und/oder IV, ein Teil der Sulfonsäurechloridgruppen hydrolysiert wird. Es kann auch so verfahren werden, daß zunächst mit einer zur vollständigen Umsetzung aller Sulfonsäurechloridgruppen nicht ausreichenden Menge an Amin, z. B. dem Amin der Formel III und/oder IV, umgesetzt wird und daß anschließend die restlichen Sulfonsäurechloridgruppen durch einen besonderen Reaktionsschritt in saurem bis schwach alkalischem Milieu, z. B. bei einem pH-Wert von 1 bis 8, gegebenenfalls in der Wärme, z. B. bei einer Temperatur von 20 bis 60°C, hydrolysiert werden.

Das neue Verfahren liefert die Zielprodukte in hoher Ausbeute und Reinheit.

Die mittels des erfindungsgemäßen Verfahrens herstellbaren Phthalocyaninreaktivfarbstoffe eignen sich zum Färben oder Bedrucken von Hydroxygruppen oder Stickstoffatome aufweisenden organischen Substraten. Solche Substrate sind beispielsweise Leder oder Fasermaterial, das überwiegend natürliche oder synthetische Polyamide oder natürliche oder regenerierte Cellulose enthält. Vorzugsweise eignen sie sich zum Färben und Bedrucken von Textilmaterial auf der Basis von Wolle oder insbesondere von Baumwolle. Man erhält Ausfärbungen in türkisblauen Farbtönen, die gute Lichtechtheit und gute Naßechtheiten, insbesondere eine gute Hypochloritbleichbarkeit aufweisen.

Die folgenden Beispiele sollen die Erfindung näher erläutern.

In den Beispielen kamen folgende Membranen zur Anwendung:

### Beispiele 1 sowie 5 bis 11:

Membran 5YM1 auf Basis von Regeneratcellulose
(Ausschlußgrenze: 1000) der Firma Amicon GmbH, D-5810 Witten

### Beispiele 2 und 4:

Membran Omega 3K auf Basis von Polyethersulfon
(Ausschlußgrenze: 3000) der Firma Filtron Molekularfiltertechnik GmbH, D-8757 Karlstein

### Beispiel 3:

Mehrschichtmembran MPT30
(Ausschlußgrenze: 400) der Firma Membrane Products, Kiryat Weizmann Ltd., Rehovot, Israel

### Beispiel 1

In 1500 ml Wasser wurden 0,6 mol Kupferphthalocyaninsulfonsäurechlorid (mit etwa 3,8 Sulfonsäurechloridgruppen) als feuchter Preßkuchen in Gegenwart eines Dispergiermittels suspendiert. Es wurden 675 g (2,4 mol)4-(2-Sulfatoethylsulfonyl)anilin und 5 g (0,06 mol) 1-Methylimidazol eingetragen. Durch Zugabe von festem Natriumhydrogencarbonat wurde der pH-Wert bei 6,2 bis 6,5 gehalten (Temperatur von ca. 25°C). Nach 7 h war die Reaktion beendet. Die Konstitution (in Form der freien Säure) wurde, wie auch in den folgenden Beispielen, nach der in Beispiel 1 der US-A-4 576 755 beschriebenen Methode bestimmt und ergibt sich zu etwa: 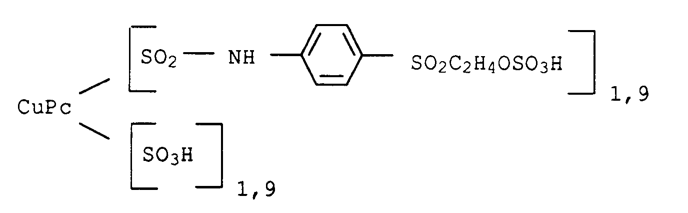
Die klare blaue Lösung wurde geteilt. Ein Teil der Lösung wurde direkt sprühgetrocknet. Der andere Teil der Reaktionslösung wurde einer Ultrafiltration mit einer oben näher bezeichneten Membran unterworfen. Die Reinigung war beendet, als sich im Ultrakonzentrat durch Diazotierung kein 4-(2-Sulfatoethylsulfonyl)anilin mehr nachweisen ließ. Der Farbstoff ließ sich durch Sprühtrocknen isolieren. Der durch Ultrafiltration gereinigte Farbstoff zeigt deutliche anwendungstechnische Vorteile in der Lichtechtheit und der Hypochloritbleichechtheit gegenüber dem unbehandelten Farbstoff.

### Beispiel 2

In 200 ml Wasser wurden 0,1 mol Kupferphthalocyaninsulfonsäurechlorid (mit etwa 3,8 Sulfonsäurechloridgruppen) als feuchter Preßkuchen in Gegenwart eines Dispergiermittels suspendiert. Es wurden 85 g (0,3 mol) 4-(2-Sulfatoethylsulfonyl)anilin und 0,8 g (0,01 mol) 1-Methylimidazol eingetragen. Durch Zugabe von festem Natriumhydrogencarbonat wurde der pH-Wert bei 6,2 bis 6,5 gehaltenen (Temperatur ca. 25°C). Nach 7 h war die Reaktion beendet. Die Konstitution (in Form der freien Säure) ergibt sich zu etwa: 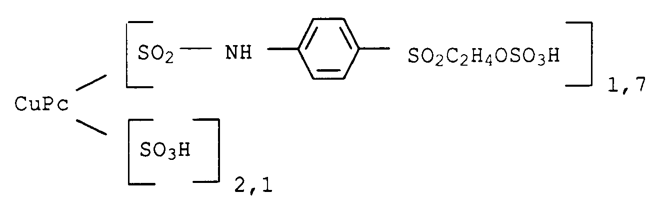
Die klare blaue Lösung wurde geteilt. Ein Teil der Lösung wurde direkt sprühgetrocknet. Der andere Teil der Reaktionslösung wurde einer Ultrafiltration mit einer oben näher bezeichneten Membran unterworfen. Die Reinigung war beendet, als sich im Ultrakonzentrat durch Diazotierung kein 4-(2-Sulfatoethylsulfonyl)anilin mehr nachweisen ließ. Der Farbstoff ließ sich durch Sprühtrocknen isolieren und wurde durch einen Phosphatpuffer stabilisiert. Der durch Ultrafiltration gereinigte Farbstoff zeigt deutliche anwendungstechnische Vorteile in der Lichtechtheit und der Hypochloritbleichechtheit gegenüber dem unbehandelten Farbstoff.

### Beispiel 3

In 1000 ml Wasser wurden 0,4 mol Kupferphthalocyaninsulfonsäurechlorid (mit etwa 3,8 Sulfonsäurechloridgruppen) als feuchter Preßkuchen in Gegenwart eines Dispergiermittels suspendiert. Es wurden 337 g (1,2 mol) 4-(2-Sulfatoethylsulfonyl)anilin und 3,2 g (0,04 mol) 1-Methylimidazol eingetragen. Durch Zugabe von festem Natriumhydrogencarbonat wurde der pH-Wert bei 6,2 bis 6,5 gehalten (Temperatur ca. 25°C). Nach ca. 7 h war die Reaktion beendet. Die Konstitution (in Form der freien Säure) ergibt sich zu etwa: 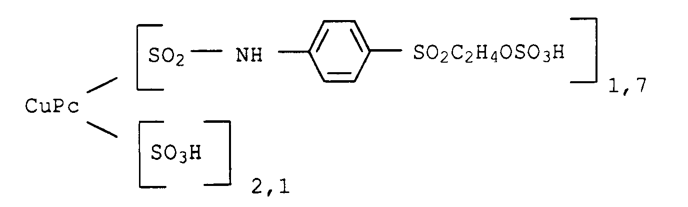
Die klare blaue Lösung wurde geteilt. Ein Teil der Lösung wurde direkt sprühgetrocknet. Der andere Teil der Reaktionslösung wurde einer Ultrafiltration mit einer oben näher bezeichneten Membran unterworfen. Die Reinigung war beendet, als sich im Ultrakonzentrat durch Diazotierung kein 4-(2-Sulfatoethylsulfonyl)anilin mehr nachweisen ließ. Der Farbstoff ließ sich durch Aussalzen oder Sprühtrocknen isolieren und wurde durch einen Phosphatpuffer stabilisiert. Der durch Ultrafiltration gereinigte Farbstoff zeigt deutliche anwendungstechnische Vorteile in der Lichtechtheit und der Hypochloritbleichechtheit gegenüber dem unbehandelten Farbstoff.

### Beispiel 4

In 500 ml Wasser wurden in Gegenwart eines Dispergiermittels und eines Entschäumers 450 g (1,6 mol) 4-(2-Sulfatoethyl)anilin eingetragen und durch Zugabe von festem Natriumhydrogencarbonat ein pH-Wert von 6,0 bis 6,5 eingestellt. Dazu wurden 0,4 mol Kupferphthalocyaninsulfonsäurechlorid (mit etwa 3,8 Sulfonsäurechloridgruppen) als feuchter Preßkuchen eingetragen, gefolgt von 0,1 mol 1-Methylimidazol. Dann wurde festes Natriumhydrogencarbonat zugegeben, um den pH-Wert bei 6,2 bis 6,5 zu halten. Die Reaktion war nach 8 h beendet. Seine Konstitution ergibt sich zu etwa: 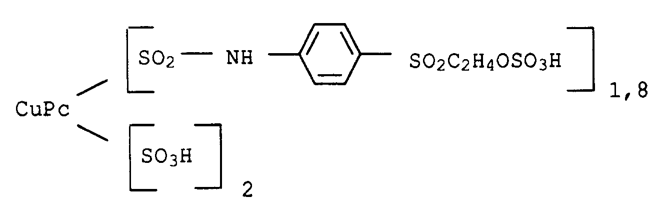
Die klare blaue Lösung wurde geteilt. Ein Teil der Lösung wurde direkt sprühgetrocknet. Der andere Teil der Reaktionslösung wurde einer Ultrafiltration mit einer oben näher bezeichneten Membran unterworfen. Der Farbstoff ließ sich durch Sprühtrocknen isolieren. Der durch Ultrafiltration gereinigte Farbstoff zeigt deutliche anwendungstechnische Vorteile in der Lichtechtheit und der Hypochloritbleichechtheit gegenüber dem unbehandelten Farbstoff.

### Beispiel 5

Man verfuhr analog Beispiel 2, verwendete jedoch anstelle von 85 g 4-(2-Sulfatoethylsulfonyl)anilin eine Mischung aus 42 g (0,15 mol) 3-(2-Sulfatoethylsulfonyl)anilin und 42 g (0,15 mol) 4-(2-Sulfatoethylsulfonyl)anilin sowie die oben näher bezeichnete Membran und erhielt einen Farbstoff der Konstitution: 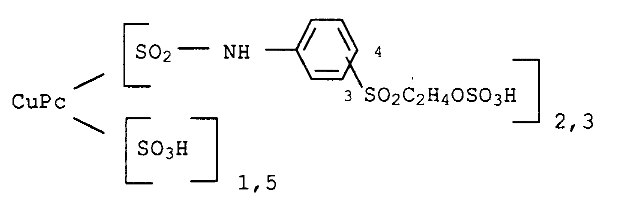
Ähnlich günstige Ergebnisse werden mit Kupferphthalocyanintetrasulfonsäurechlorid, Kupferphthalocyaninsulfonsäurechlorid (mit 3,1 oder 3,6 Sulfonsäurechloridgruppen) oder mit 3-(2-Sulfatoethylsulfonyl)anilin erhalten.

### Beispiel 6

Beispiel 6 wurde analog Beispiel 2 durchgeführt, jedoch wurden 85 g (0,3 mol) 3-(2-Sulfatoethylsulfonyl)anilin zur Umsetzung verwendet. Unter Verwendung der oben näher bezeichneten Membran erhielt man den Farbstoff der Formel

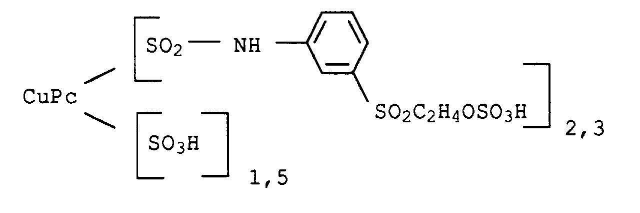

### Beispiel 7

Beispiel 7 wurde analog Beispiel 3 durchgeführt, jedoch wurden 674 g (2,4 mol) 4-(2-Sulfatoethylsulfonyl)anilin zur Umsetzung verwendet. Unter Verwendung der oben näher bezeichneten Membran erhielt man den Farbstoff der Formel

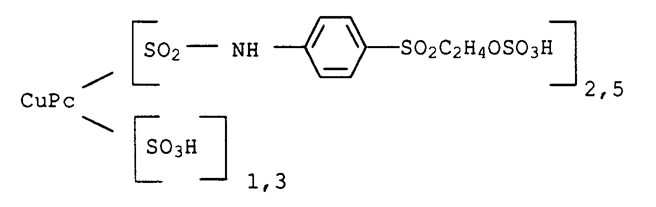

### Beispiel 8

In 400 ml Wasser wurden 0,2 mol Kupferphthalocyaninsulfonsäurechlorid (mit etwa 3,8 Sulfonsäurechloridgruppen) als feuchter Preßkuchen in Gegenwart eines Dispergiermittels suspendiert. Es wurden 239 g (0,85 mol) 3-(2-Sulfatoethylsulfonyl)anilin und 1,6 g (0,02 mol) 1-Methylimidazol eingetragen. Durch Zugabe von festem Natriumhydrogencarbonat wurde der pH-Wert bei 6,2 bis 6,5 gehaltenen (Temperatur ca. 25°C). Nach 7 h war die Reaktion beendet. Die Konstitution (in Form der freien Säure) ergibt sich zu etwa: 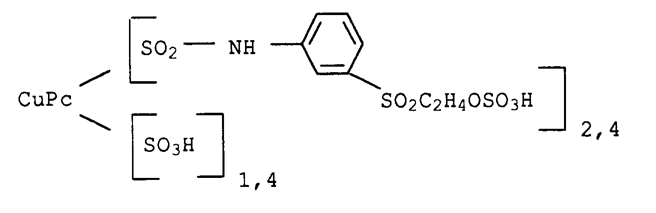
Die klare blaue Lösung wurde geteilt. Ein Teil der Lösung wurde direkt sprühgetrocknet. Der andere Teil der Reaktionslösung wurde einer Ultrafiltration mit einer oben näher bezeichneten Membran unterworfen. Die Reinigung war beendet, als sich im Ultrakonzentrat durch Diazotierung kein 3-(2-Sulfatoethylsulfonyl)anilin mehr nachweisen ließ. Der Farbstoff ließ sich durch Sprühtrocknen isolieren. Der durch Ultrafiltration gereinigte Farbstoff zeigt deutliche anwendungstechnische Vorteile in der Lichtechtheit und der Hypochloritbleichechtheit gegenüber dem unbehandelten Farbstoff.

### Beispiel 9

In 200 ml Wasser wurden 0,1 mol Kupferphthalocyaninsulfonsäurechlorid (mit etwa 3,8 Sulfonsäurechloridgruppen) als feuchter Preßkuchen in Gegenwart eines Dispergiermittels suspendiert. Es wurden 169 g (0,6 mol) 3-(2-Sulfatoethylsulfonyl)anilin und 0,8 g (0,01 mol) 1-Methylimidazol eingetragen. Durch Zugabe von festem Natriumhydrogencarbonat wurde der pH-Wert bei 6,2 bis 6,5 gehaltenen (Temperatur ca. 25°C). Nach 7 h war die Reaktion beendet. Die Konstitution (in Form der freien Säure) ergibt sich zu etwa: 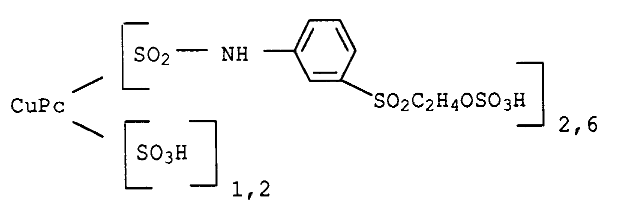
Die klare blaue Lösung wurde geteilt. Ein Teil der Lösung wurde direkt sprühgetrocknet. Der andere Teil der Reaktionslösung wurde einer Ultrafiltration mit einer oben näher bezeichneten Membran unterworfen. Die Reinigung war beendet, als sich im Ultrakonzentrat durch Diazotierung kein 3-(2-Sulfatoethylsulfonyl)anilin mehr nachweisen ließ. Der Farbstoff ließ sich durch Sprühtrocknen isolieren. Der durch Ultrafiltration gereinigte Farbstoff zeigt deutliche anwendungstechnische Vorteile in der Lichtechtheit und der Hypochloritbleichechtheit gegenüber dem unbehandelten Farbstoff.

### Beispiel 10

In 300 ml Wasser wurden 0,1 mol Kupferphthalocyaninsulfonsäurechlorid (mit etwa 3,8 Sulfonsäurechloridgruppen) als feuchter Preßkuchen in Gegenwart eines Dispergiermittels suspendiert. Es wurden 89 g (0,3 mol) 3-(2-Sulfatoethylsulfonylmethyl)anilin und 2,4 g (0,02 mol) 4-Dimethylaminopyridin eingetragen. Durch Zugabe von festem Natriumhydrogencarbonat wurde der pH-Wert bei 6,2 bis 6,5 gehaltenen (Temperatur ca. 25°C). Nach 7 h war die Reaktion beendet. Die Konstitution (in Form der freien Säure) ergibt sich zu etwa: 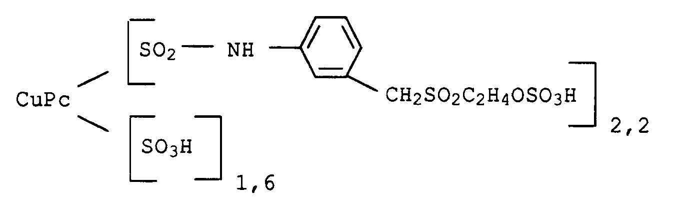
Die klare blaue Lösung wurde geteilt. Ein Teil der Lösung wurde direkt sprühgetrocknet. Der andere Teil der Reaktionslösung wurde einer Ultrafiltration mit einer oben näher bezeichneten Membran unterworfen. Die Reinigung war beendet, als sich im Ultrakonzentrat durch Diazotierung kein 3-(2-Sulfatoethylsulfonylmethyl)anilin mehr nachweisen ließ. Der Farbstoff ließ sich durch Sprühtrocknen isolieren und wurde durch einen Phosphatpuffer stabilisiert. Der durch Ultrafiltration gereinigte Farbstoff zeigt deutliche anwendungstechnische Vorteile in der Lichtechtheit und der Hypochloritbleichechtheit gegenüber dem unbehandelten Farbstoff.

### Beispiel 11

Beispiel 11 wurde analog Beispiel 10 durchgeführt, jedoch wurde anstelle von 3-(2-Sulfatoethylsulfonylmethyl)anilin 4-(2-Sulfatoethylsulfonylmethyl)anilin verwendet. Man erhielt den Farbstoff der Formel

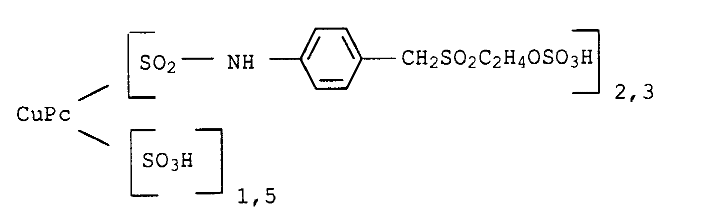

## Patentansprüche

1. Verfahren zur Herstellung von Phthalocyaninreaktivfarbstoffen der Formel I 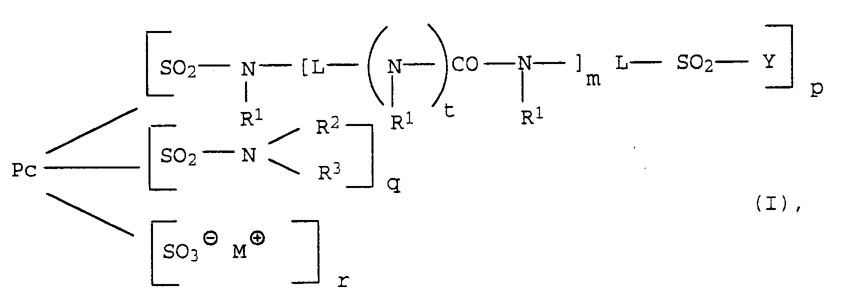 in der
Pc den Rest eines metallfreien oder metallhaltigen Phthalocyaninsystems, das gegebenenfalls durch Chlor oder Phenyl substituiert ist,
R¹ Wasserstoff oder C₁-C₆-Alkyl,
R² und R³ unabhängig voneinander jeweils Wasserstoff, C₁-C₆-Alkyl, das gegebenenfalls durch 1 oder 2 Sauerstoffatome in Etherfunktion unterbrochen ist, Phenyl oder zusammen mit dem sie verbindenden Stickstoffatom einen fünf- oder sechsgliedrigen gesättigten heterocyclischen Rest, der weitere Heteroatome aufweisen kann,
L C₂-C₄-Alkylen, das gegebenenfalls durch ein Sauerstoffatom in Etherfunktion unterbrochen ist, Naphthylen oder einen Rest der Formel 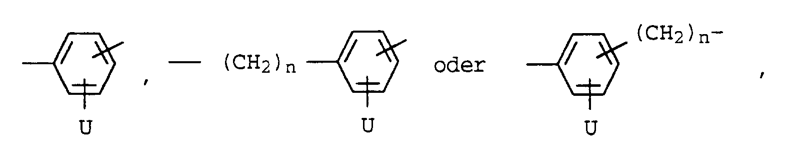 worin U für Wasserstoff, Hydroxysulfonylmethyl oder Hydroxysulfonyl und n für 1 oder 2 stehen,
Y Vinyl oder einen Rest der Formel C₂H₄-Q, worin Q für eine unter alkalischen Reaktionsbedingungen abspaltbare Gruppe steht,
M^{⊕} das Äquivalent eines Kations,
m 0 oder 1,
p 1 bis 3,
q 0 bis 3,
r 1 bis 3 und
t 0 oder 1 bedeuten,
mit der Maßgabe, daß die Summe von p, q und r höchstens 4 ist, durch Umsetzung eines Phthalocyaninsulfonsäurechlorids der Formel II 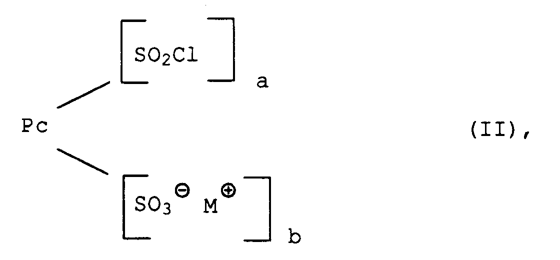 in der Pc und M^{⊕} jeweils die obengenannte Bedeutung besitzen und a 1 bis 4 und b 0 bis 3 bedeuten, mit der Maßgabe, daß die Summe von a und b höchstens 4 ist, oder einer Mischung von Phthalocyaninsulfonsäurechloriden der Formel II in wäßrigem Medium mit einem Amin der Formel III 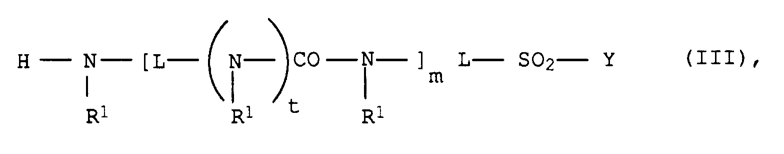 in der R¹, L, Y, m und t jeweils die obengenannte Bedeutung besitzen, und gegebenenfalls mit einem Amin der Formel IV 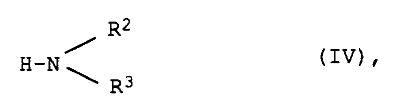 in der R² und R³ jeweils die obengenannte Bedeutung besitzen, sowie gegebenenfalls in Anwesenheit eines stickstoffhaltigen Heterocyclus, wobei die Reihenfolge der Umsetzung mit den Aminen III und IV beliebig sein kann, dadurch gekennzeichnet, daß man nach beendeter Umsetzung das Reaktionsgemisch einer Membranbehandlung unterwirft, und es so in ein wäßriges Retentat, in dem die Farbstoffe der Formel I aufkonzentriert sind, und in ein wäßriges Permeat, das Salze, das Amin der Formel III sowie gegebenenfalls das Amin der Formel IV enthält, auftrennt.

2. Verfahren nach Anspruch 1, dadurch gekennzeichnet, daß man die Umsetzung in Gegenwart eines stickstoffhaltigen Heterocyclus durchführt.

3. Verfahren nach Anspruch 1, dadurch gekennzeichnet, daß man die Umsetzung bei einer Temperatur von 0 bis 60°C vornimmt.

4. Verfahren nach Anspruch 1, dadurch gekennzeichnet, daß man das resultierende Reaktionsgemisch einer Ultrafiltration unterwirft.

5. Verfahren nach Anspruch 1, dadurch gekennzeichnet, daß
Pc den Rest eines Kupferphthalocyaninsystems, das nicht weiter substituiert ist,
R¹ Wasserstoff oder C₁-C₄-Alkyl,
R² und R³ unabhängig voneinander jeweils Wasserstoff oder C₁-C₄-Alkyl, das gegebenenfalls durch ein Sauerstoffatom in Etherfunktion unterbrochen ist,
L C₂-C₃-Alkylen, Phenylen oder Phenylenmethylen und
m und t jeweils 0 bedeuten und Y, M^{⊕}, p, q und r jeweils die in Anspruch 1 genannte Bedeutung besitzen.
